# EUROPEAN PATENT SPECIFICATION

(11) **EP 3 174 326 B1**
(45) Date of publication and mention of the grant of the patent: **06.11.2019**
(21) Application number: 15306879.6
(22) Date of filing: 26.11.2015
(51) Int. Cl.: H04W 12/06, H04W 12/04, H04L 29/06

(54) **METHOD FOR PROVIDING A WIRELESS USER STATION FOR ACCESS TO A TELECOMMUNICATION NETWORK THROUGH A NETWORK WIRELESS ACCESS POINT, ASSOCIATED NETWORK WIRELESS ACCESS POINT AND WIRELESS USER STATION**
VERFAHREN ZUR BEREITSTELLUNG EINER DRAHTLOSEN TEILNEHMERSTATION FÜR DEN ZUGANG ZU EINEM TELEKOMMUNIKATIONSNETZWERK ÜBER EINEN DRAHTLOSNETZWERKZUGANGSPUNKT, ZUGEHÖRIGER DRAHTLOSNETZWERKZUGANGSPUNKT UND DRAHTLOSE TEILNEHMERSTATION
PROCÉDÉ D'ATTRIBUTION À UNE STATION UTILISATEUR SANS FIL D'UN ACCÈS À UN RÉSEAU DE TÉLÉCOMMUNICATION VIA UN POINT D'ACCÈS RÉSEAU SANS FIL, POINT D'ACCÈS RÉSEAU SANS FIL ET STATION UTILISATEUR SANS FIL ASSOCIÉS

(43) Date of publication of application: 31.05.2017
(73) Proprietor: ALSTOM Transport Technologies, 93400 Saint-Ouen (FR); Neratec Solutions AG, 8608 Bubikon (CH)
(72) Inventor: FAYT, Etienne, 7020 Nimy (BE); VETILLARD, Jean-Noel, 69003 Lyon (FR); DUBOWIK, Wojciech, 8632 Tann (CH); HARJU, Jussi, 8620 Wetzikon (CH)
(74) Representative: Lavoix

(56) References cited:
- WO-A1-2013/040042
- US-A1- 2007 280 481

## Description

The present invention generally relates to telecommunication network including wireless access points and implementing authenticating scheme between wireless access points and wireless user stations before providing telecommunication services to the wireless user stations through the wireless access points.

The invention relates more particularly to a method for providing a wireless user station for access to a telecommunication network through a network wireless access point, including the steps of :
- deriving, by each of the wireless user station and the wireless network access point, a second key from at least a first key shared by the wireless user station and the network access point;
- performing, through wireless communication, an authenticating step between wireless user station and the network wireless access point as a function of the respective second keys derived by the wireless user station and the network wireless access point;
   - providing access of the wireless user station to the telecommunication network through the network wireless access point as a function of the result of the authenticating step.

Document US 2007/280481 A1 discloses an alteration of the known four-way handshake mechanism comprising the addition of a step wherein an access point attempts to utilize a PSK key from a list of PSKs to validate a Message Integrity Code providing by a station trying to connect to the network until one of the PSKs validates the message.

Document WO 213/040042 A1 discloses a three parties authentication mechanism followed by an altered four-way handshake mechanism.

For example, the IEEE 802.11 standard defines two types of access methods to a network:
- access method based on Extensible Authentication protocol,
- access method based on Pre-Shared Keys (PSK).

Each access method includes an authentication and an establishment of pairwise group keys. These access methods differ by the authentication protocol.

The access method based on the Extensible Authentication protocol requires the exchange of information between three entities: the IEEE802.11 radio user station (the supplicant), the access point (the authenticator) and an authentication server. The authentication server is used to certify to the access point that the user station is allowed to associate and to certify to the user station that the selected access point is part of the network. This approach provides a mutual authentication. The authentication server is also use for key management.

The access method based on Pre-Shared Keys requires the exchange of information between two entities only: the IEEE802.11 radio user station (the supplicant) and the access point (the authenticator). The authentication phase is simplified and performed by the access point. The authentication and establishment of pairwise group key are merged and relies on the knowledge by both entities of a pre-shared key. The security of authentication and of communication relies on the confidentiality of the pre-shared key.

If the access method based on the Extensible Authentication protocol provides the highest level of security because of the mutual authentication of user station and access point and also the key management performed by the Authentication server, an access method based on Pre-Shared Key is much faster because it requires a limited exchange of information between only two entities, and is also simple to implement because it does not require an authentication server. The total duration of an access operation between the issue of an association request and the success of operation is above 1 second for the access method based on the Extensible Authentication protocol and a few milliseconds (ms) for the access method based on Pre-Shared Key.

There is a balance to be considered between the security level and the complexity and performance of a radio System, especially in cases wherein frequent handovers occur such as considering a user station inside a running train and communicating with a network including fixed access points.

Thus, the invention proposes a method for providing access to a telecommunication network, a network wireless access point configured to provide wireless user station(s) with access to the telecommunication network, a wireless user station configured to get access to the telecommunication network according to the appended claims.

The invention enables thus to enhance the security level of access methods based on Pre-Shared Keys.

In some embodiments, the method according to the invention further includes one or several of the following features:
- at each updating time of an updating pattern including several updating times, the network wireless access point obtains an updated value of the parameter and transmits wirelessly the updated value of the parameter thus obtained; and wherein any future authentication step relative to the wireless user station having received the updated value of the parameter is performed as a function of the second key derived by the wireless user station from at least the first key and further from the transmitted updated value of the parameter;
- a server provides several access points, through the telecommunication network (3), with said updated value of the parameter and any of these several access points wirelessly transmits the updated value of the parameter;
- the authenticating step between wireless user station and the network wireless access point is performed in accordance to the IEEE 802.11 standard;
- the updated value of the parameter is wirelessly transmitted by the wireless access point as included in the beacon messages of the wireless access point further including wireless access point identification information and cyclically broadcasted.

The present invention is illustrated by way of example, and not by way of limitation, in the figures of the accompanying drawings and in which like reference numerals refer to similar elements and in which:
- Figure 1 shows diagrammatically a telecommunication network implementing an embodiment of the invention;
- Figure 2 is a flow chart illustrating steps of a method according to an embodiment of the invention;
- Figure 3 is a flow chart representing steps of a method according to an embodiment of the invention.

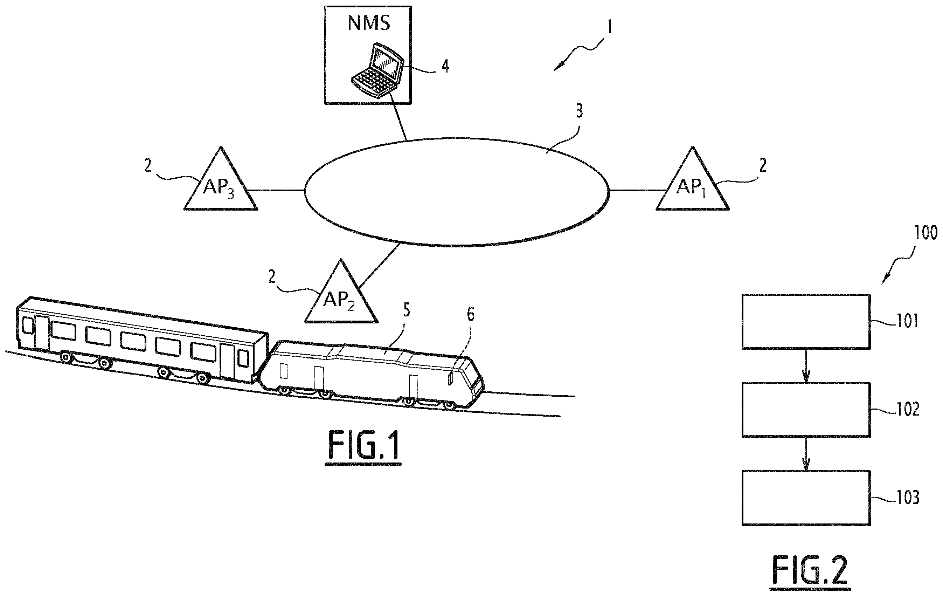

Figure 1 shows diagrammatically a telecommunication system 1 implementing an embodiment of the invention.

The telecommunication system 1 includes:
- a backbone network 3 from which telecommunication services can be provided, such as Internet services;
- one or several wireless user station(s) 6;
- several wireless access points 2 including the wireless access points 2 called AP₁, AP₂, AP₃, each connected to the backbone network 3.

A network manager server (NMS) 4 is also connected to the backbone network 3.

In the considered embodiment, a user station 6 is a radio user station 6, including a radio interface, a radiofrequency antenna, a microcomputer and a memory (not shown in the figures).

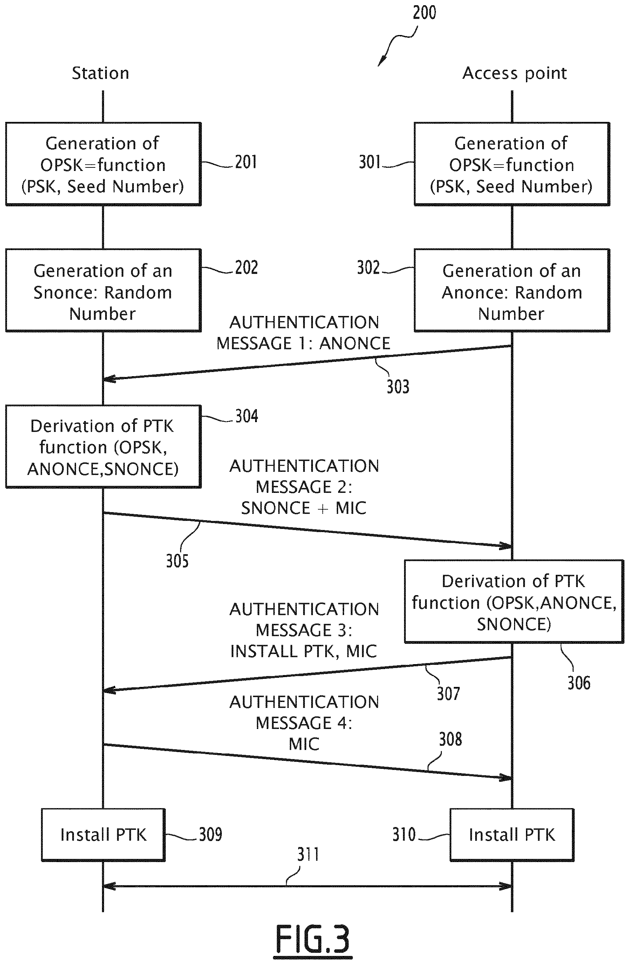

The memory of a user station 6 includes software instructions that once executed on the microcomputer of the user station 6, implement the steps described hereafter, including the steps referring to Figures 2 and 3 and performed by the user station 6.

In the considered embodiment, each of the access point AP₁, AP₂, AP₃ includes a radio interface, a radiofrequency antenna, a microcomputer and a memory (not shown in the Figures). Each of the access point AP₁, AP₂, AP₃ corresponds to a respective radio coverage area and is adapted to deliver the telecommunication services provided by the backstage network 3 to the radio user stations located inside the radio coverage area of said access point.

The memory of each of the access point AP₁, AP₂, AP₃ includes software instructions that once executed on the microcomputer of the access point, implement the steps described hereafter, including the steps referring to figures 2 and 3 and performed by the access point.

The radio interface of a user station 6 is adapted to communicate with the radio interface of the access point 2. In the considered embodiment of the invention, the respective radio interfaces are adapted to communicate according to IEEE 802.11 (amendment 802.11i) standard completed as disclosed hereafter regarding the generation of the Pairwise Transient Key (PTK) that is generated from the Pre-Shared Key (PSK) as known, and also is generated according to the invention, in addition according to a regularly modified parameter.

In the specific embodiment considered in reference to figure 1, a radio user station 6, considered hereafter is for example a user station of a communication base train control radio system, and is inside a train 5. Whereas the train 5 goes along its railway line, the user station 6 successively goes through the radio coverage area of the access point AP₃, then through the radio coverage area of the access point AP₂ and finally through the radio coverage area of the access point AP₁. Several handoffs of the user station 6 with these successive access points 2 therefore occur.

The use of IEEE 802.11i provides for protection against intentional or unintentional interception by an authentication mechanism and encryption of all packets with payload data. The authentication mechanism avoids that an unauthorised user sets up a radio connection and the encryption of packets with payload data avoids that these ones be intercepted by any unauthorised user.

In accordance to IEEE 802.11i, the user stations 6 of the telecommunication system 1 and the access points 2 of the telecommunication system 1 have in memory a same stored pre-shared key PSK.

The pre-shared key PSK is used, as shown hereafter referring to figures 2 and 3, to generate a common pairwise transient key PTK in a user station 6 and in parallel in the access point implementing the authentication step, such PTK being used in authentication and used also in encryption/decryption of all packets including payload data.

A new PTK is generated in a user station 6 during an authentication step with an access point, after each handoff and after each power up and initialization stage of the user station 6.

According to the invention, referring to the set 100 of steps represented by the flow chart in Figure 2, in a step 101, a modified value of a parameter, called hereafter seed number, for example a random value, is generated by the NMS 4, and is transmitted to the access points 2 by the NMS 4 through the backbone network 3, for example in accordance with the Simple Network Management Protocol (SNMP).

The step 101 is repeated according to a determined seed number actualization pattern, for example a new value is randomly given to the seed number on a cyclic basis (one renewed seed number per week, per day, or per hour for example).

In a step 102, the last new value of the seed number is regularly transmitted by the radio interface of any access point 2.

In an embodiment of this step 102, each time a new value of the seed number is received from the NMS 4 by an access point 2, the access point 2 replaces, in a given field of its beacon message, the previously received seed number value by the newly received seed number value. As known, the beacon message further includes identification data of the access point 2 that are used by the user stations 6, in addition to the beacon reception level measurement when attempting to connect to the telecommunication system 1 through the access point in order to use telecommunication services provided by the telecommunication system. The beacon message of an access point 2 is transmitted repeatedly by the radio interface of the access point, for example every 30 ms.

The transmitted beacon messages are in the considered embodiment in compliance with the beacon messages of IEEE 802.11 standard, the seed number value being inserted in the field of the beacon message dedicated to proprietary information.

In addition, in an embodiment of this step 102, each time a new value of the seed number is received by an access point 2 from the NMS 4, the access point 2 replaces, in a given field of its probe response frames, the previously received seed number value by the newly received seed number value.

As known, the probe response frames of IEEE 802.11, including identification data of an access point, are transmitted by the radio interface of the access point 2 in response to any probe request sent by a user station 6 and received by the access point.

The transmitted probe response frames according the considered embodiment of the invention are in compliance with the IEEE 802.11 standard, the seed number value being inserted in the field dedicated to proprietary information.

In a step 103, the new value of the seed number transmitted by an access point 2 in step 102 is received by the radio interface of a user station 6 located inside the radio coverage area of the access point 2 and is stored in its memory. The user station 6 generates a PTK key as a function of the PSK key stored in the user station memory and of this lastly stored value of the seed number.

Said PTK key is generated each time the on-board user station 6 performs a handoff or is powered up, during an authentication step between the user station and the access point, and is also used for subsequent encryption/decryption.

The invention enables to increase the security of the telecommunication system 1 with a very limited impact on the telecommunication system performances (for example on handoff duration) and complexity.

Such advantages are valuable for example in trains running at speed up to 100 km/h, wherein on-board user stations perform frequent handovers between access points and handover duration shall be as short as possible with a value lower than 100 ms in 90 percent of the handovers.

In an embodiment of step 103, each time the on-board user station 6 performs an handoff or is powered up, the user station 6 searches for a new suitable access point 2 by listening beacons transmitted by surrounding access points 2, according to IEEE 802.11. To speed up suitable access point research, optionally the user station 6 sends a probe request, according to IEEE 802.11.

Then the user station 6 analyses listened beacons and/or probe response frames, selects a suitable access point 2 according to IEEE 802.11, for example the access point AP₃ (as known, the access point AP₃ is selected based upon at least the reception level, by the user station 6, of the radio signal transmitted by the access point AP₃). The user station 6 stores, in its memory, information contained inside the beacon and/or probe response transmitted by the selected access point AP₃ including security parameters such as the type of authentication according to IEEE 802.11 and the new seed number. Then the user station 6 transmits, via its radio interface, to the selected access point AP₃, an association request according to IEEE 802.11 requiring association with the selected access point AP₃. Once the association step exchanges between the user station 6 are successfully completed and the selected access point AP₃ is associated with the user station 6, the authentication step then starts. No telecommunication of payload data is possible until the completion of the authentication step between the access point AP₃ and the user station 6.

Figure 3 represents a flow chart representing steps of the authenticating stage 200 between a user station 6 and the associated access point the selected access point AP₃, such as performed in an embodiment of step 103.

In step 201, the user station 6 generates an operational shared key OPSK, as a result of a function (function F1) of the pre-shared key PSK stored in its memory and of the new seed number that was lastly stored in its memory: OPSK = F1(PSK, seed number).

In an embodiment, the function F1 is based on PBKDF2 function defined in the IETF RFC2898.
In step 202, the user station 6 generates a SNONCE value, that can be a random number generated on the basis of PBKDF2 defined in the RFC2898 with the main inputs being OPSK and a random number or a Random generated directly generated according to IETF RFC 4086.

In parallel to steps 201 and 202, in step 301, the access point AP3 generates also an operational shared key OPSK, as a result of a function (function F1) of the pre-shared key PSK stored in its memory and of the seed number that was lastly stored in its memory (OPSK = F1(PSK, seed number) and in step 302, the access point AP3 generates a ANONCE. that can be a Random number generated on the basis of PBKDF2 defined in the RFC2898 with the main inputs being OPSK and a random number or a Random generated according to IETF RFC 4086

In a step 303, the access point AP₃ transmits to the user station 6, through the respective radio interfaces, a first authentication message including the generated ANONCE value.

In a step 304, the user station 6 receives the first authentication message transmitted by the access point AP3 and derives a pairwise transient key PTK from the ANONCE value included in the received first authentication message and from the SNONCE and the operational shared key OPSK generated in step 201: PTK = F3(ANONCE, SNONCE, OPSK), wherein F3 is a function of the ANONCE value and of the OPSK value and also the SNONCE value.

In an embodiment, the function F3 is the PRF-n function defined by the IEEE802.11 standard.

In a step 305, the user station 6 transmits to the access point AP₃, through the respective radio interfaces, a second authentication message including the generated SNONCE value and a Message Integrity Code (MIC) based on CBTC-MAC as defined in the four ways handshake mechanism specified by the IEEE802.11 standard. In a step 306, the access point AP₃ receives the second authentication message transmitted by the user station 6. The access point AP₃ checks that the MIC in the received second authentication message is valid (for example, it is considered as valid if and only if the MIC calculated on its own by the access point is equal to the MIC which is in the received second authentication message and was calculated by the user station based on SNONCE and the header in the message), and only in case the MIC is checked as valid (else the authentication fails), the access point AP3 derives a pairwise transient key PTK from the SNONCE value included in the received second authentication message and from the operational shared key OPSK generated in step 201 and also the ANONCE: PTK = F4(ANONCE,SNONCE, OPSK), wherein F4 is a function of the ANONCE value, SNONCE value and of the OPSK value. The F4 function is the F3 Function that is the PRF-n function defined by the IEEE802.11 standard.

In a step 307, the access point AP₃ transmits to the user station 6, through the respective radio interfaces, a third authentication message including a notification of installing PTK certified with a MIC calculated from the header of the third authentication message and from ANONCE.

In a step 308, the user station 6 receives the third authentication message transmitted by the access point AP₃ as defined in the IEEE802.11 four way handshake mechanism. The user station 6 checks if the MIC in the received third authentication message is valid (similarly to step 306, the user station computes the MIC on the content of the third authentication message and compare with the MIC inside the message ; if and only if they are the same, the message is considered as valid), and only in case the MIC is checked as valid (else the authentication fails), the user station 6 transmits a forth authentication message to the access point AP3 including a MIC calculated from the header of the forth authentication message and from SNONCE.

Then in a step 309, the user station 6 installs in its memory the key PTK generated in step 304.

In a step 310, the access point AP₃ receives the forth authentication message transmitted by the user station 6 and then the access point AP₃ installs in its memory the key PTK generated in step 306.

The authentication is then completed and the communication of payload data can the occurs (step 311), these payload data being encrypted/decrypted by the user station 6 using encryption/decryption key(s) based upon the PTK key stored in its memory (and similarly the payload data being encrypted/decrypted by the access point AP₃ using the PTK key stored in its memory).

In standard prior art IEEE 802.11, considering Figure 3, the steps 201 and 301 did not exist and in the steps 202, 302-311, the pre-shared key PSK was used instead of the key OPSK, to generate the pairwise transient key PTK. The invention enables to transform a static key (the PSK key) into a dynamic one (the OPSK key).

Hereabove the steps 202, 302, 303, 304, 305, 306, 307, 308, 309, 310 are the steps defined in IEEE 802.11 for authentication stage when considering the dynamic OPSK instead of the static PSK.

The invention enables to increase the level of security without significantly increasing the complexity of the system architecture or the handover duration.

An embodiment of the invention has been here above described referring to the figures in the case of IEEE 802.11 radio communications between the user stations and the network access points. Of course, the use of a static key shared by the access points and the user stations and of a random number regularly modified according to the invention in authenticating step and/or encryption/decryption step can be implemented using radio protocols for communicating that are different from IEEE 802.11, and more generally in embodiments of the invention, other wireless interfaces for communicating can be used instead of radio interfaces.

## Claims

1. Method for providing access to a telecommunication network (3) of a wireless user station (6) through network wireless access points (2), the network wireless access points being connected to a network manager server (4) through a telecommunication network (3), **characterized in that** the method includes successively the steps of :
- generating, by the network manager server, an updated value of a parameter, said updated value of the parameter being transmitted to the network wireless access points;
- wirelessly transmitting by the network wireless access points the updated value of the parameter;
- wirelessly receiving by the wireless user station the updated value of the parameter transmitted by the network wireless access points;
- deriving, by each of the wireless user station and the wireless network access points, a second key from at least a first key and further from the received updated value of the parameter, the first key being a static pre-shared key, which is shared by the wireless user station and the network access points and stored in the memory of the wireless user station and the network access points, respectively;
- performing, through wireless communication, an authenticating step between the wireless user station and a given access points of the network wireless access points based on the second keys derived by the wireless user station and the network wireless access point;
- providing access of the wireless user station to the telecommunication network through the network wireless access point as a result of the authenticating step,
the authenticating step being a four-way handshake mechanism between the wireless user station and the given access point as specified by the IEEE 802.11 standard.

2. Method for providing access to a telecommunication network (3) of a wireless user station (6) through a network wireless access point (2) according to claim 1, wherein the authenticating step comprises:
- the user station generates a first random number, SNONCE;
- the given access point generates a second random number, ANONCE;
- the given access point transmits to the user station a first authentication message including the second random number;
- the user station derives a pairwise transient key, PTK from the first and second random numbers and the second key, OPSK;
- the user station transmits to the access point a second authentication message including the first random number and a Message Integrity Code, MIC, based on CBTC-MAC;
- the access point checks whether the Message Integrity Code received is valid and, only in case the Message Integrity Code is valid, the access point derives the pairwise transient key, PTK, from the first and second random numbers and the second key, OPSK;
- the access point transmits to the user station a third authentication message including a notification of installing the pairwise transient key, certified with a Message Integrity Code calculated from the header of the third authentication message and from the second random number;
- the user station checks whether the a Message Integrity Code is valid and, only in case the a Message Integrity Code is valid, the user station transmits a forth authentication message to the access point including a Message Integrity Code calculated from the header of the forth authentication message and from the first random number;
- the user station installs in its memory the pairwise transient key generated and the access point, on reception of the forth authentication message, installs in its memory the pairwise transient key generated.

3. Method for providing access to a telecommunication network (3) of a wireless user station (6) through a network wireless access point (2) according to claim 1 or claim 2, wherein the authenticating step starts with the user station generating a first random number, SNONCE, and the given access point generating a second random number, ANONCE, the first and second random number being random numbers generated on the basis of PBKDF2 function defined in rfc2898 with the main inputs being the second key and a random number.

4. Method for providing access to a telecommunication network (3) of a wireless user station (6) through a network wireless access point (2) according to claim 1, wherein, at each updating time of an updating pattern including several updating times, the network wireless access point obtains an updated value of the parameter and transmits wirelessly the updated value of the parameter thus obtained; and wherein any future authentication step relative to the wireless user station having received the updated value of the parameter is performed as a function of the second key derived by the wireless user station from at least the first key and further from the transmitted updated value of the parameter.

5. Method for providing access to a telecommunication network (3) of a wireless user station (6) through a network wireless access point (2) according to any preceding claim, wherein the updated value of the parameter is wirelessly transmitted by the wireless access point as included in the beacon messages of the wireless access point further including wireless access point identification information and cyclically broadcasted.

6. Network wireless access point (2), configured to provide a wireless user station (6) with access to a telecommunication network (3), the network wireless access point being connected to a network manager server (4) through the telecommunication network (3), said network wireless access point being **characterized in that** it comprises:
- means for obtaining an updated value of a parameter generated by the network manager server,
- means for wirelessly transmitting by the network wireless access point the updated value of the parameter,
- means for deriving a second key from at least a first key, and further from the transmitted updated value of the parameter, the first key being a static pre-shared key, shared by the wireless user station and the network access point and stored in the memory of the wireless user station and the network access point, respectively;
- means for performing, through wireless communication, an authenticating step with the wireless user station as a function of the derived second key, and
- means for providing access of the wireless user station to the telecommunication network as a function of the result of the authenticating step,
the authenticating step being a four-way handshake mechanism between the wireless user station and the given access point as specified by the IEEE 802.11 standard.

7. Network wireless access point (2) according to claim 6, wherein the authenticating step starts with the user station generating a first random number, SNONCE, and the access point generates a second random number, ANONCE, the first and second random number being random numbers generated on the basis of PBKDF2 function defined in rfc2898 with the main inputs being the second key and a random number.

8. Network wireless access point (2) according to claim 6 or claim 7, adapted for, at each updating time of an updating pattern including several updating times, obtaining an updated value of the parameter and transmitting wirelessly the updated value of the parameter thus obtained.

9. Network wireless access point (2) according to any preceding claim 6 to 8, adapted for wirelessly transmitting the updated value of the parameter as included in the beacon messages of the wireless access point further including wireless access point identification information and cyclically broadcasted.

10. Wireless user station (6) configured to get access to a telecommunication network through a network wireless access point (2), the network wireless access point being connected to a network manager server (4) through the telecommunication network (3), **characterized in that** said wireless user station comprises :
- means for wirelessly receiving an updated value of a parameter transmitted by the network wireless access point, the updated value of the parameter being generated by the network manager server; and,
- means for deriving a second key from at least a first shared key and further from the received updated value of the parameter, the first key being a static pre-shared key, shared by the wireless user station and the network access point and stored in the memory of the wireless user station and the network access point, respectively;
- means for performing, through wireless communication, an authenticating step with the network wireless access point as a function of the derived second key; and,
- means for accessing to the telecommunication network through the network wireless access point as a function of the result of the authenticating step,
the authenticating step being a four-way handshake mechanism between the wireless user station and the given access point as specified by the IEEE 802.11 standard.

11. Wireless user station (6) according to claim 10, adapted for performing any future authentication step as a function of the second key derived by the wireless user station from at least the first key and further from the updated value of the parameter received at the last occurred updating time of an updating pattern including several updating times,

12. Wireless user station (6) according to claim 10 or 11, wherein the authenticating step starts with the user station generating a first random number, SNONCE, and the access point generates a second random number, ANONCE, the first and second random number being random numbers generated on the basis of PBKDF2 function defined in rfc2898 with the main inputs being the second key and a random number.

13. Wireless user station (6) according to any preceding claim 10 to 12, adapted for receiving the updated value of the parameter as included in the beacon messages cyclically broadcasted by the wireless access point and further including wireless access point identification information.

## Patentansprüche

1. Verfahren zum Bereitstellen des Zugangs zu einem Telekommunikationsnetzwerk (3) einer drahtlosen Benutzerstation (6) über drahtlose Netzwerkzugangspunkte (2), wobei die drahtlosen Netzwerkzugangspunkte durch ein Telekommunikationsnetzwerk (3) mit einem Netzwerkverwaltungsserver (4) verbunden sind, dadurch charakterisiert, dass das Verfahren hintereinander die Schritte aufweist:
- Erzeugen, durch den Netzwerkverwaltungsserver eines aktualisierten Werts eines Parameters, wobei der aktualisierte Wert des Parameters an die drahtlosen Netzwerkzugangspunkte übertragen wird;
- drahtloses Übertragen des aktualisierten Werts des Parameters durch die drahtlosen Netzwerkzugangspunkte;
- drahtloses Empfangen, durch die drahtlose Benutzerstation, des aktualisierten Werts des durch die drahtlosen Netzwerkzugangspunkte übertragenen Parameters,
- Ableiten, durch jede drahtlose Benutzerstation und die drahtlosen Netzwerkzugangspunkte, eines zweiten Schlüssels aus mindestens einem ersten Schlüssel und ferner von dem empfangenen aktualisierten Wert des Parameters, wobei der erste Schlüssel ein statischer zuvor ausgetauschter Schlüssel ist, der von der drahtlosen Benutzerstation und den Netzwerkzugangspunkten ausgetauscht wird und in dem Speicher der drahtlosen Benutzerstation bzw. der Netzwerkzugangspunkte gespeichert wird;
- Durchführen, mittels drahtloser Kommunikation, eines Authentifizierungsschritts zwischen der drahtlosen Benutzerstation und einem gegebenen drahtlosen Zugangspunkt der Netzwerkzugangspunkte basierend auf den zweiten Schlüsseln, die von der drahtlosen Benutzerstation und dem drahtlosen Netzwerkzugangspunkt abgeleitet wurden;
- Bereitstellen des Zugangs der drahtlosen Benutzerstation zu dem Telekommunikationsnetzwerk über den drahtlosen Netzwerkzugangspunkt als Ergebnis des Authentifizierungsschritts,
wobei der Authentifizierungsschritt ein Vier-Wege-Handshake-Mechanismus zwischen der drahtlosen Benutzerstation und dem gegebenen Zugangspunkt, wie von dem IEEE 802.11-Standard spezifiziert, ist.

2. Verfahren zum Bereitstellen des Zugangs zu einem Telekommunikationsnetzwerk (3) einer drahtlosen Benutzerstation (6) über einen drahtlosen Netzwerkzugangspunkt (2) nach Anspruch 1, wobei der Authentifizierungsschritt aufweist:
- die Benutzerstation erzeugt eine erste Zufallszahl, SNONCE;
- der gegebene Zugangspunkt erzeugt eine zweite Zufallszahl, ANONCE;
- der gegebene Zugangspunkt überträgt eine erste Authentifizierungsnachricht, die die zweite Zufallszahl enthält, an die Benutzerstation;
- die Benutzerstation leitet einen paarweise transienten Schlüssel, PTK, aus der ersten und der zweiten Zufallszahl und dem zweiten Schlüssel, OPSK, ab;
- die Benutzerstation überträgt eine zweite Authentifizierungsnachricht, die die erste Zufallszahl und einen auf CBTC-MAC basierenden Nachrichtenintegritätscode, MIC, enthält, an den Zugangspunkt;
- der Zugangspunkt überprüft, ob der empfangene Nachrichtenintegritätscode gültig ist und nur in dem Fall, dass der Nachrichtenintegritätscode gültig ist, leitet der Zugangspunkt den paarweise transienten Schlüssel, PTK, aus der ersten Zufallszahl und der zweiten Zufallszahl und dem zweiten Schlüssel, OPSK, ab;
- der Zugangspunkt überträgt eine dritte Authentifizierungsnachricht an die Benutzerstation, die eine Benachrichtigung über das Installieren des paarweise transienten Schlüssels enthält, zertifiziert mit einem aus dem Nachrichtenkopf der dritten Authentifizierungsnachricht und der zweiten Zufallszahl berechneten Nachrichtenintegritätscode;
- die Benutzerstation überprüft, ob der Nachrichtenintegritätscode gültig ist und nur in dem Fall, dass der Nachrichtenintegritätscode gültig ist, überträgt die Benutzerstation eine vierte Authentifizierungsnachricht an den Zugangspunkt, die einen aus dem Nachrichtenkopf der vierten Authentifizierungsnachricht und der ersten Zufallszahl berechneten Nachrichtenintegritätscode enthält;
- die Benutzerstation installiert in ihrem Speicher den erzeugten paarweise transienten Schlüssel und der Zugangspunkt installiert bei Empfang der vierten Authentifizierungsnachricht in seinem Speicher den erzeugten paarweise transienten Schlüssel.

3. Verfahren zum Bereitstellen des Zugangs zu einem Telekommunikationsnetzwerk (3) einer drahtlosen Benutzerstation (6) über einen drahtlosen Netzwerkzugangspunkt (2) nach Anspruch 1 oder 2, wobei der Authentifizierungsschritt damit beginnt, dass die Benutzerstation eine erste Zufallszahl, SNONCE, erzeugt und der gegebene Zugangspunkt eine zweite Zufallszahl, ANONCE, erzeugt, wobei die erste Zufallszahl und die zweite Zufallszahl Zufallszahlen sind, die auf der Basis der in rfc2898 definierten PBKDF2-Funktion erzeugt werden, wobei die Haupteingaben der zweite Schlüssel und eine Zufallszahl sind.

4. Verfahren zum Bereitstellen des Zugangs zu einem Telekommunikationsnetzwerk (3) einer drahtlosen Benutzerstation (6) über einen drahtlosen Netzwerkzugangspunkt (2) nach Anspruch 1, wobei, zu jeder Aktualisierungszeit eines Aktualisierungsmusters, das mehrere Aktualisierungszeiten beinhaltet, der drahtlose Netzwerkzugangspunkt einen aktualisierten Wert des Parameters erhält und den aktualisierten Wert des so erhaltenen Parameters drahtlos überträgt; und wobei jeder zukünftige Authentifizierungsschritt in Bezug auf die drahtlose Benutzerstation, die den aktualisierten Wert des Parameters empfangen hat, abhängig von dem zweiten Schlüssels ausgeführt wird, der von der drahtlosen Benutzerstation aus mindestens dem ersten Schlüssel und ferner von dem übertragenen aktualisierten Wert des Parameters abgeleitet wird.

5. Verfahren zum Bereitstellen des Zugangs zu einem Telekommunikationsnetzwerk (3) einer drahtlosen Benutzerstation (6) über einen drahtlosen Netzwerkzugangspunkt (2) nach irgendeinem vorhergehenden Anspruch, wobei der aktualisierte Wert des Parameters drahtlos von dem drahtlosen Zugangspunkt übertragen wird, wie er in den Funkbaken-Nachrichten des drahtlosen Zugangspunkts enthalten ist, die ferner Informationen zur Identifizierung des drahtlosen Zugangspunkts enthalten und zyklisch rundgesendet werden.

6. Drahtloser Netzwerkzugangspunkt (2), der eingerichtet ist, um eine drahtlose Benutzerstation (2) Zugang zu einem Telekommunikationsnetzwerk bereitzustellen, wobei der drahtlose Netzwerkzugangspunkt mit einem Netzwerkverwaltungsserver (4) durch das Telekommunikationsnetzwerk (3) verbunden ist, wobei der drahtlose Netzwerkzugangspunkt dadurch charakterisiert ist, dass er aufweist:
- Mittel zum Erhalten eines aktualisierten Werts eines von dem Netzwerkverwaltungsserver erzeugten Parameters,
- Mittel zum drahtlosen Übertragen durch den drahtlosen Netzwerkzugangspunkt des aktualisierten Werts des Parameters,
- Mittel zum Ableiten eines zweiten Schlüssels aus mindestens einem ersten Schlüssel und ferner aus dem übertragenen aktualisierten Wert des Parameters, wobei der erste Schlüssel ein statischer zuvor ausgetauschter Schlüssel ist, der von der drahtlosen Benutzerstation und dem Netzwerkzugangspunkt ausgetauscht wird und in dem Speicher der drahtlosen Benutzerstation bzw. des Netzwerkzugangspunkts gespeichert wird;
- Mittel zum Durchführen, mittels drahtloser Kommunikation, eines Authentifizierungsschritts mit der drahtlosen Benutzerstation abhängig von dem abgeleiteten zweiten Schlüssel und
- Mittel zum Bereitstellen des Zugangs der drahtlosen Benutzerstation zu dem Telekommunikationsnetzwerk abhängig von dem Authentifizierungsschritt,
wobei der Authentifizierungsschritt ein Vier-Wege-Handshake-Mechanismus zwischen der drahtlosen Benutzerstation und dem gegebenen Zugangspunkt, wie von dem IEEE 802.11-Standard spezifiziert, ist.

7. Drahtloser Netzwerkzugangspunkt (2) nach Anspruch 6, wobei der Authentifizierungsschritt damit beginnt, dass die Benutzerstation eine erste Zufallszahl, SNONCE, erzeugt und der Zugangspunkt eine zweite Zufallszahl, ANONCE, erzeugt, wobei die erste Zufallszahl und die zweite Zufallszahl Zufallszahlen sind, die auf der Basis der in rfc2898 definierten PBKDF2-Funktion erzeugt werden, wobei die Haupteingaben der zweite Schlüssel und eine Zufallszahl sind.

8. Drahtloser Netzwerkzugangspunkt (2) nach Anspruch 6 oder 7, eingerichtet zum Beschaffen, zu jeder Aktualisierungszeit eines Aktualisierungsmusters, das mehrere Aktualisierungszeiten beinhaltet, eines aktualisierten Wert des Parameters und drahtloses Übertragen des so erhaltenen aktualisierten Werts des Parameters.

9. Drahtloser Netzwerkzugangspunkt (2) nach einem vorhergehenden Anspruch 6 bis 8, eingerichtet zum drahtlosen Übertragen des aktualisierten Wertes des Parameters, wie er in den Funkbaken-Nachrichten des drahtlosen Zugangspunkts enthalten ist, die ferner Informationen zur Identifizierung des drahtlosen Zugangspunkts enthalten und zyklisch rundgesendet werden.

10. Drahtlose Benutzerstation (6), die eingerichtet ist, um Zugang zu einem Telekommunikationsnetzwerk über einen drahtlosen Netzwerkzugangspunkt (2) zu erhalten, wobei der drahtlose Netzwerkzugangspunkt mit einem Netzwerkverwaltungsserver (4) über das Telekommunikationsnetzwerk (3) verbunden ist, dadurch charakterisiert, dass die drahtlose Benutzerstation aufweist:
- Mittel zum drahtlosen Empfangen eines aktualisierten Werts eines von dem Netzwerkzugangspunkt übertragenen Parameters, wobei der aktualisierte Wert des Parameters von dem Netzwerkverwaltungsserver erzeugt wird; und
- Mittel zum Ableiten eines zweiten Schlüssels aus mindestens einem ersten Schlüssel und ferner aus dem empfangenen aktualisierten Wert des Parameters, wobei der erste Schlüssel ein statischer zuvor ausgetauschter Schlüssel ist, der von der drahtlosen Benutzerstation und dem Netzwerkzugangspunkt ausgetauscht wird und in dem Speicher der drahtlosen Benutzerstation bzw. des Netzwerkzugangspunkts gespeichert wird;
- Mittel zum Durchführen, mittels drahtloser Kommunikation, eines Authentifizierungsschritts mit dem drahtlosen Netzwerkzugangspunkt abhängig von dem abgeleiteten zweiten Schlüssel und
- Mittel zum Zugreifen auf das Telekommunikationsnetzwerk durch den drahtlosen Netzwerkzugangspunkt abhängig von dem Authentifizierungsschritt,
wobei der Authentifizierungsschritt ein Vier-Wege-Handshake-Mechanismus zwischen der drahtlosen Benutzerstation und dem gegebenen Zugangspunkt, wie von dem IEEE 802.11-Standard spezifiziert, ist.

11. Drahtlose Benutzerstation (6) nach Anspruch 10, eingerichtet, jeden zukünftigen Authentifizierungsschritt abhängig von dem zweiten Schlüssel auszuführen, der von der drahtlosen Benutzerstation aus mindestens dem ersten Schlüssel und ferner aus dem Wert des Parameters abgeleitet wird, der bei der letzten Aktualisierungszeit eines Aktualisierungsmusters, das mehrere Aktualisierungszeiten beinhaltet, aufgetreten ist, empfangen wurde.

12. Drahtlose Benutzerstation (6) nach Anspruch 10 oder 11, wobei der Authentifizierungsschritt damit beginnt, dass die Benutzerstation eine erste Zufallszahl, SNONCE, erzeugt und der Zugangspunkt eine zweite Zufallszahl, ANONCE, erzeugt, wobei die erste Zufallszahl und die zweite Zufallszahl Zufallszahlen sind, die auf der Basis der in rfc2898 definierten PBKDF2-Funktion erzeugt werden, wobei die Haupteingaben der zweite Schlüssel und eine Zufallszahl sind.

13. Drahtlose Benutzerstation (6) nach einem vorhergehenden Anspruch 10 bis 12, eingerichtet zum Erhalten des aktualisierten Werts des Parameters, wie er in den Funkbaken-Nachrichten enthalten ist, die von dem drahtlosen Zugangspunkts zyklisch rundgesendet werden und die ferner Informationen zur Identifizierung des drahtlosen Zugangspunkts enthalten.

## Revendications

1. Procédé de fourniture d'accès à un réseau de télécommunication (3) d'une station utilisateur sans fil (6) par l'intermédiaire de points d'accès sans fil de réseau (2), les points d'accès sans fil de réseau étant connectés à un serveur de gestion de réseau (4) par l'intermédiaire d'un réseau de télécommunication (3), **caractérisé en ce que** le procédé inclut les étapes successives ci-dessous consistant à :
- générer, par le biais du serveur de gestion de réseau, une valeur mise à jour d'un paramètre, ladite valeur mise à jour du paramètre étant transmise aux points d'accès sans fil de réseau ;
- transmettre, par voie hertzienne, par le biais des points d'accès sans fil de réseau, la valeur mise à jour du paramètre ;
- recevoir, par voie hertzienne, par le biais de la station utilisateur sans fil, la valeur mise à jour du paramètre transmise par les points d'accès sans fil de réseau ;
- dériver, par chaque élément parmi la station utilisateur sans fil et les points d'accès sans fil de réseau, une seconde clé, à partir d'au moins une première clé, et en outre à partir de la valeur mise à jour reçue du paramètre, la première clé étant une clé pré-partagée statique, qui est partagée par la station utilisateur sans fil et les points d'accès sans fil de réseau et qui est stockée dans la mémoire de la station utilisateur sans fil et dans les points d'accès sans fil de réseau, respectivement ;
- mettre en œuvre, à travers une communication sans fil, une étape d'authentification entre la station utilisateur sans fil et un point d'accès donné parmi les points d'accès sans fil de réseau, sur la base des secondes clés dérivées par la station utilisateur sans fil et du point d'accès sans fil de réseau ;
- fournir l'accès de la station utilisateur sans fil, au réseau de télécommunication, par l'intermédiaire du point d'accès sans fil de réseau, à la suite de l'étape d'authentification ;
l'étape d'authentification correspondant à un mécanisme d'établissement de liaison quadridirectionnel entre la station utilisateur sans fil et le point d'accès donné, tel que spécifié par la norme IEEE 802.11.

2. Procédé de fourniture d'accès à un réseau de télécommunication (3) d'une station utilisateur sans fil (6) par l'intermédiaire d'un point d'accès sans fil de réseau (2) selon la revendication 1, dans lequel l'étape d'authentification comprend les étapes ci-dessous dans lesquelles :
- la station utilisateur génère un premier nombre aléatoire, SNONCE ;
- le point d'accès donné génère un second nombre aléatoire, ANONCE ;
- le point d'accès donné transmet, à la station utilisateur, un premier message d'authentification incluant le second nombre aléatoire ;
- la station utilisateur dérive une clé transitoire par paire, PTK, à partir des premier et second nombres aléatoires et de la seconde clé, OPSK ;
- la station utilisateur transmet, au point d'accès, un deuxième message d'authentification incluant le premier nombre aléatoire et un code d'intégrité de message, MIC, basé sur CBTC-MAC ;
- le point d'accès vérifie si le code d'intégrité de message reçu est valide et, uniquement dans le cas où le code d'intégrité de message est valide, le point d'accès dérive la clé transitoire par paire, PTK, à partir des premier et second nombres aléatoires et de la seconde clé, OPSK ;
- le point d'accès transmet, à la station utilisateur, un troisième message d'authentification incluant une notification d'installation de la clé transitoire par paire, certifié par un code d'intégrité de message calculé à partir de l'en-tête du troisième message d'authentification et à partir du second nombre aléatoire ;
- la station utilisateur vérifie si le code d'intégrité de message est valide et, uniquement dans le cas où le code d'intégrité de message est valide, la station utilisateur transmet un quatrième message d'authentification, au point d'accès, incluant un code d'intégrité de message calculé à partir de l'en-tête du quatrième message d'authentification et à partir du premier nombre aléatoire ; et
- la station utilisateur installe, dans sa mémoire, la clé transitoire par paire générée, et le point d'accès, suite à la réception du quatrième message d'authentification, installe, dans sa mémoire, la clé transitoire par paire générée.

3. Procédé de fourniture d'accès à un réseau de télécommunication (3) d'une station utilisateur sans fil (6) par l'intermédiaire d'un point d'accès sans fil de réseau (2) selon la revendication 1 ou 2, dans lequel l'étape d'authentification commence par la génération, par la station utilisateur, d'un premier nombre aléatoire, SNONCE, et par la génération, par le point d'accès donné, d'un second nombre aléatoire, ANONCE, les premier et second nombres aléatoires étant des nombres aléatoires générés sur la base de la fonction PBKDF2 définie dans la spécification RFC2898 où les entrées principales correspondent à la seconde clé et à un nombre aléatoire.

4. Procédé de fourniture d'accès à un réseau de télécommunication (3) d'une station utilisateur sans fil (6) par l'intermédiaire d'un point d'accès sans fil de réseau (2) selon la revendication 1, dans lequel, à chaque instant de mise à jour d'un motif de mise à jour incluant plusieurs instants de mise à jour, le point d'accès sans fil de réseau obtient une valeur mise à jour du paramètre et transmet, par voie hertzienne, la valeur mise à jour du paramètre ainsi obtenue ; et dans lequel toute étape d'authentification future concernant la station utilisateur sans fil ayant reçu la valeur mise à jour du paramètre est mise en oeuvre en fonction de la seconde clé dérivée, par la station utilisateur sans fil, à partir d'au moins la première clé et en outre à partir de la valeur mise à jour transmise du paramètre.

5. Procédé de fourniture d'accès à un réseau de télécommunication (3) d'une station utilisateur sans fil (6) par l'intermédiaire d'un point d'accès sans fil de réseau (2) selon l'une quelconque des revendications précédentes, dans lequel la valeur mise à jour du paramètre est transmise, par voie hertzienne, par le point d'accès sans fil, telle qu'incluse dans les messages de balise du point d'accès sans fil, incluant en outre des informations d'identification de point d'accès sans fil, et diffusés de manière cyclique.

6. Point d'accès sans fil de réseau (2), configuré de manière à fournir, à une station utilisateur sans fil (6), un accès à un réseau de télécommunication (3), le point d'accès sans fil de réseau étant connecté à un serveur de gestion de réseau (4) par l'intermédiaire du réseau de télécommunication (3), **caractérisé en ce qu'**il comprend :
- un moyen pour obtenir une valeur mise à jour d'un paramètre, générée par le serveur de gestion de réseau ;
- un moyen pour transmettre, par voie hertzienne, par le biais du point d'accès sans fil de réseau, la valeur mise à jour du paramètre ;
- un moyen pour dériver une seconde clé, à partir d'au moins une première clé, et en outre à partir de la valeur mise à jour transmise du paramètre, la première clé étant une clé pré-partagée statique, qui est partagée par la station utilisateur sans fil et le point d'accès de réseau, et qui est stockée dans la mémoire de la station utilisateur sans fil et dans le point d'accès de réseau, respectivement ;
- un moyen pour mettre en œuvre, par l'intermédiaire d'une communication sans fil, une étape d'authentification avec la station utilisateur sans fil, en fonction de la seconde clé dérivée, et
- un moyen pour fournir l'accès de la station utilisateur sans fil au réseau de télécommunication en fonction du résultat de l'étape d'authentification ;
l'étape d'authentification correspondant à un mécanisme d'établissement de liaison quadridirectionnel entre la station utilisateur sans fil et le point d'accès donné, tel que spécifié par la norme IEEE 802.11.

7. Point d'accès sans fil de réseau (2) selon la revendication 6, dans lequel l'étape d'authentification commence par la génération, par la station utilisateur, d'un premier nombre aléatoire, SNONCE, et par la génération, par le point d'accès donné, d'un second nombre aléatoire, ANONCE, les premier et second nombres aléatoires étant des nombres aléatoires générés sur la base de la fonction PBKDF2 définie dans la spécification RFC2898 où les entrées principales correspondent à la seconde clé et à un nombre aléatoire.

8. Point d'accès sans fil de réseau (2) selon la revendication 6 ou 7, apte à, à chaque instant de mise à jour d'un motif de mise à jour incluant plusieurs instants de mise à jour, obtenir une valeur mise à jour du paramètre et transmettre, par voie hertzienne, la valeur mise à jour du paramètre ainsi obtenue.

9. Point d'accès sans fil de réseau (2) selon l'une quelconque des revendications 6 à 8, apte à transmettre, par voie hertzienne, la valeur mise à jour du paramètre, telle qu'incluse dans les messages de balise du point d'accès sans fil, incluant en outre des informations d'identification de point d'accès sans fil, et diffusés de manière cyclique.

10. Station utilisateur sans fil (6) configurée de manière à obtenir l'accès à un réseau de télécommunication par l'intermédiaire d'un point d'accès sans fil de réseau (2), le point d'accès sans fil de réseau étant connecté à un serveur de gestion de réseau (4) par l'intermédiaire du réseau de télécommunication (3), **caractérisée en ce que** ladite station utilisateur sans fil comprend :
- un moyen pour recevoir, par voie hertzienne, une valeur mise à jour d'un paramètre transmise par le point d'accès sans fil de réseau, la valeur mise à jour du paramètre étant générée par le serveur de gestion de réseau ; et
- un moyen pour dériver une seconde clé à partir d'au moins une première clé partagée et, en outre, à partir de la valeur mise à jour reçue du paramètre, la première clé étant une clé pré-partagée statique, qui est partagée par la station utilisateur sans fil et le point d'accès de réseau, et qui est stockée dans la mémoire de la station utilisateur sans fil et dans le point d'accès de réseau, respectivement ;
- un moyen pour mettre en œuvre, par l'intermédiaire d'une communication sans fil, une étape d'authentification avec le point d'accès sans fil de réseau, en fonction de la seconde clé dérivée ; et
- un moyen pour accéder au réseau de télécommunication, par l'intermédiaire du point d'accès sans fil de réseau, en fonction du résultat de l'étape d'authentification ;
l'étape d'authentification correspondant à un mécanisme d'établissement de liaison quadridirectionnel entre la station utilisateur sans fil et le point d'accès donné, tel que spécifié par la norme IEEE 802.11.

11. Station utilisateur sans fil (6) selon la revendication 10, apte à mettre en oeuvre toute étape d'authentification future, en fonction de la seconde clé, dérivée par la station utilisateur sans fil à partir d'au moins la première clé et en outre à partir de la valeur mise à jour du paramètre, reçue au cours du dernier instant de mise à jour d'un motif de mise à jour incluant plusieurs instants de mise à jour.

12. Station utilisateur sans fil (6) selon la revendication 10 ou 11, dans laquelle l'étape d'authentification commence par la génération, par la station utilisateur, d'un premier nombre aléatoire, SNONCE, et par la génération, par le point d'accès, d'un second nombre aléatoire, ANONCE, les premier et second nombres aléatoires étant des nombres aléatoires générés sur la base de la fonction PBKDF2 définie dans la spécification RFC2898 où les entrées principales correspondent à la seconde clé et à un nombre aléatoire.

13. Station utilisateur sans fil (6) selon l'une quelconque des revendications 10 à 12, apte à recevoir la valeur mise à jour du paramètre, telle qu'incluse dans les messages de balise diffusés de manière cyclique par le point d'accès sans fil, et incluant en outre des informations d'identification de point d'accès sans fil.
